Europäisches Patentamt

European Patent Office

Office européen des brevets

(11) Publication number: **0 195 542**
**A1**

## (12) EUROPEAN PATENT APPLICATION

(21) Application number: **86301411.4**

(22) Date of filing: **27.02.86**

(51) Int. Cl.⁴: **A 01 G 27/00**

(30) Priority: **05.03.85 GB 8505545**

(43) Date of publication of application:
**24.09.86 Bulletin 86/39**

(84) Designated Contracting States:
**AT BE CH DE FR GB IT LI LU NL SE**

(71) Applicant: **Cooper, James Martin**
**1, Spring Rise**
**Simmondley Glossop Derbyshire SK13 9US(GB)**

(72) Inventor: **Cooper, James Martin**
**1, Spring Rise**
**Simmondley Glossop Derbyshire SK13 9US(GB)**

(74) Representative: **Middlemist, Ian Alastair**
**I.A. Middlemist & Co. 26 Lockside**
**Marple Stockport Cheshire SK6 6BN(GB)**

(54) Self watering means for plant pots.

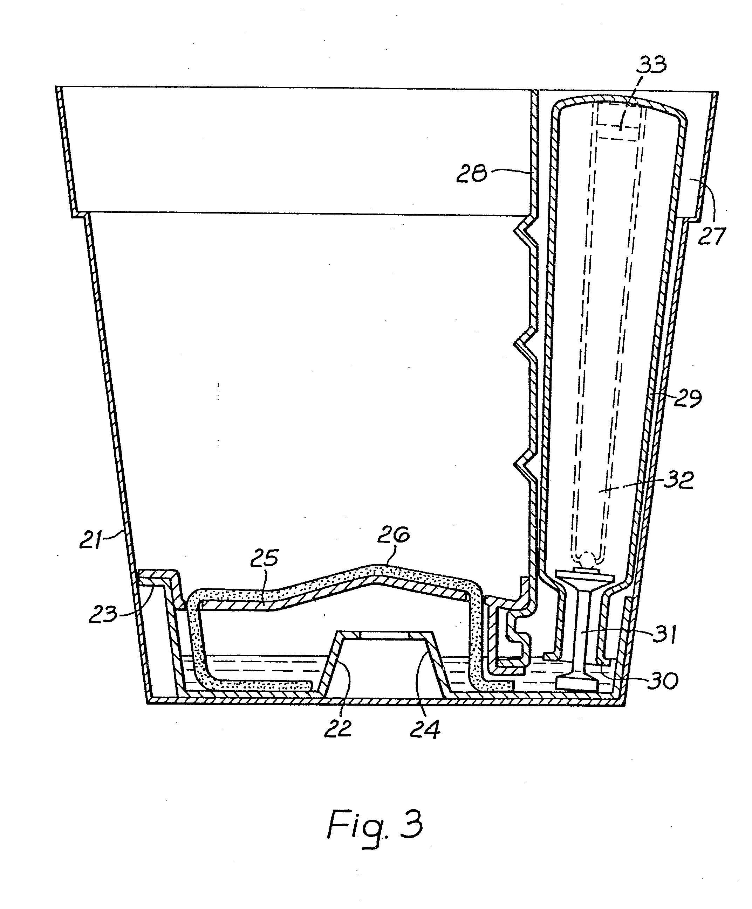

(57) Self watering means for a plant pot comprise a reservoir (5, 22) to be placed in the bottom of a plant pot (1, 21), and a generally horizontal cover or bridge (3, 25) supporting a wick ribbon (6, 26) in contact with plant nutrient medium in the pot to transfer water to the medium through the wick. A partition (28) or sleeve (8) defines a compartment in which a container (9, 29) is located with its outlet (10, 30) directed downwardly and defining water level in the reservoir. A normally closed valve (11, 31) is opened by pressing the container into position. A side compartment (32) with a marker float may be provided (Figure 3) with an outlet close to the outlet of the container (29), sudden emptying of the side compartment and dissapearance of the marker float (33) signaling that the container is nearly empty. The reservoir may extend substantially over the base of the pot, and have a boss (24) with a drainage aperture, or be a relatively small cup (5).

Fig. 1

EP 0 195 542 A1

## Self Watering Means For Plant Pots

This invention relates to self watering means for plant pots, for supply with, or for addition to existing plant pots to enable them to become self watering. Self watering plant pots are pots wherein a plant nutrient medium, such as soil moss or humus for example, is watered from a reservoir of water below the medium, in the base of the pot, rather than by the occasional pouring of water into the pot from above.

Self watering plant pots are known, wherein a reservoir in the form of a tray is located in the base of the pot, and covered by a generally horizontally disposed cover so that a volume is enclosed in the base of the plant pot for a reservoir of water. The water is fed up to the plant nutrient medium from the reservoir by a woven textile wick ribbon similar to a lamp wick, the ends of which dip into the reservoir and which passes over the cover so as to be in contact with the plant nutrient medium.

The reservoir can, but in some cases may not, be provided with a drainage aperture in a raised boss, which defines an upper level for water in the reservoir. In some versions a feed opening is provided in the form of a passage down one side of the pot, patitioned from the main volume of the pot by a channel sectioned insert, tube or partition made for example of a synthetic plastics material.

A disadvantage of this form of pot is that the water in the reservoir is not visible, and it is thus not possible to ascertain when the water supply needs recharging. Also, water resupply being accomplished by pouring water into the reservoir down for example a tube or channel down one side of the pot especially in those embodiments without a drainage aperture, there is considerable risk of flooding of the plant nutrient medium, which may be harmful to the health of some pot plant species.

An object of the invention is to provide self watering means for plant pots which can have a steady feed of water to plant nutrient medium in the plant pot, and preferably also make it possible to ascertain when the water needs recharging.

According to the invention, there is provided self watering means for a plant pot, comprising a reservoir for location in the base of a plant pot, a generally horizontally disposed member for supporting plant nutrient medium above the level of the reservoir, and a wick ribbon having at least one end in the reservoir and a substantial part of said ribbon disposed on said horizontally disposed member to transfer water to the plant nutrient medium by capilliary action in the wick ribbon, characterised in that an upstanding partition (8, 28) is provided in the pot (1, 21) to define a comparment, and a container for water is located in the compartment, with an outlet of the container being downwardly directed and defining the level of water in the reservoir whereby water is supplied from the container to the reservoir at the same rate as depletion of the reservoir is effected by transfer of water to the plant nutrient medium by the wick ribbon.

Advantageously, the container may have a sub-compartment opening to the mani volume of the container towards the level of the outlet of the container, so that the water will only drain from the sub-compartment when the water in the container is almost exhausted, a marker float being located in the sub-compartment to float on the water therein, so that its disappearance signals that the container is ready to be removed and refilled.

The partition is advantageously a cylindrical member, within which a bottle shaped container can be located, and plant nutrient medium compacted around the partition. Alternatively the partition may comprise an e.g. straight wall which partitions asector of the pot to accomodate the reservoir.

The container preferrably has a stopper or valve which may be spring loaded to be normally closed, and acts to keep the container closed until it is in position, the valve being opened by a probe being pushed inwardly into the outlet of the container by pressing on the bottom of the reservoir when the container is put into its place.

In an alternative embodiment, the invention provides an external reservoir, having step means for supporting the base of the pot clear of the base of the reservoir, and a wick ribbon for passing through drainage holes of the pot into the reservoir. In this case a container may be disposed externally of the pot to have its outlet in the reservoir or in an extension thereof.

A preferred embodiment of plant pot and self watering meand for such plant pot according to the invention will now be described with reference to the accompanying drawings, by way of example only.

In the drawings:-

Fig. 1 is a vertical cross-sectional view through a plant pot with self watering means according to a first embodiment of the invention;

Fig. 2 is a plan view of the pot and self watering means of Fig. 1; and

Fig. 3 is a vertical sectional view of a plant pot with a second embodiment of self watering means according to the invention.

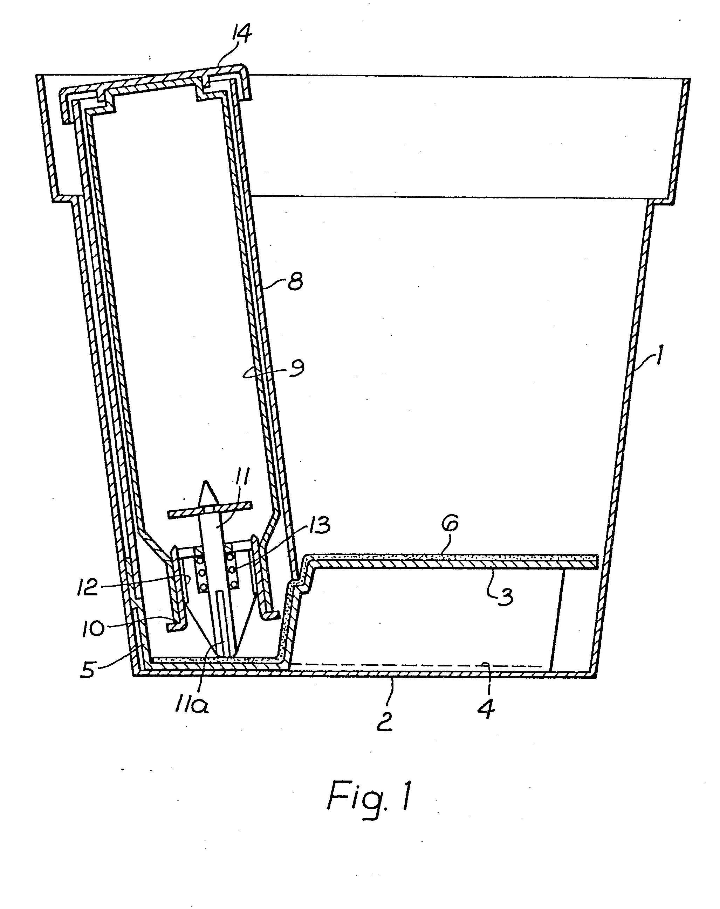

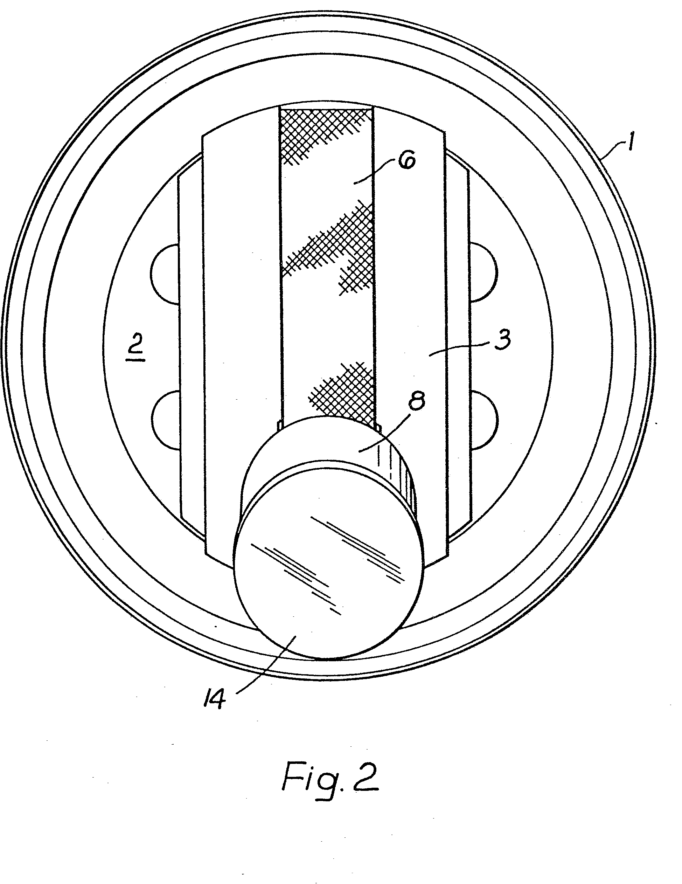

The preferred embodiment of plant pot and self watering means according to the invention illustrated in Figs. 1 and 2 comprises an outer pot 1, of synthetic plastics material. In the bottom of the pot is located a cup-shaped reservoir 5, having an integral bridge 3. The reservoir cup 5 is located to one side of the pot, resting on the pot base 2. The bridge 3 is arched to support one end of a wick ribbon 6, the other end of which is rested on the base of the cup 5.

A tubular sleeve 8 defines a compartment resting on a step in the wall of reservoir cup 5. Tube 8 houses a water container 9, in the form of a blow-moulded plastics bottle. The container 9 is positioned with an outlet 10 extending down into the reservoir cup 5, the level of the outlet being at, and defining a desired water level in the container below the maximum water level defined by the rim of cup 5. The container outlet 10 has a valve arrangement 11, which is biased, for example by spring 13 to a seat 12 to keep the opening 10 closed until the container is put into its correct position, whereby the valve 11 is opened by pressing the container into its proper position, as shown, bearing on end 11a of the stem of valve 11.

The container 9 may have a side tube or sub-compartment (not shown) which opens into the main part of the container somewhat above the opening 10, but below the level of all but a relatively insignifigant proportion of the volume of the container. This side tube or sub-compartment may be filled with water at the same time as the container, but will only drain when the level of water in the container has dropped below the level of sub-compartment. A marker float may be present in the sub-compartment and will remain visible from above until the water drains relatively rapidly from the sub-compartment. This will indicate that the container is almost empty, and due to be refilled or replaced.

Referring to Fig. 3, another embodiment of plant pot with self watering means according to the invention comprises a pot 21 in the bottom of which is located a dish shaped reservoir tray22, having a rim 23 and a central drainage aperture in a raised boss 24. The reservoir tray 22 is covered by a generally horizontally disposed cover 25, which has a roof shaped profile to support the central portion of a wick ribbon 26, both ends of which rest on the base of the reservoir 22 after having passed through slots in cover 25.

A compartment 27 is separated from the main volume of the pot by a generally upstanding partition 28 disposed along a chord of the circle defined in plan by the pot. The minor section of the volume defined by the partition 28 in the compartment 27 houses a bottle shaped container 29, which may be contoured to conform to the internal shape and dimensions of the compartment 27. The container 29 has an outlet 30 extending down into the reservoir tray 22, the level of the outlet being at and defining a desired water level in the reservoir, below the maximum water level defined by the drainage aperture in the boss 24. The container outlet 30 has a valve arrangement 31, which is biased by spring loading to keep the opening 30 closed until the cont- ainer is put into its correct position, whereby the valve 31 is opened by pressing the container into its proper position, as shown.

The container 29 has a side tube or sub-compartment 22, shown in broken lines, which opens into the main part of the container somewhat above the opening 30. This side tube is filled with water at the same time as the container and has a marker float 33. The sub-compartment operates in the way explained above for the optional side tube in Figs. 1 and 2.

The cover 25 conforms in plan shape to the horizontal cross-section of the major section of the pot, as defined by the partition 28. The reservoir tray also conforms in plan to the plan of the major section, but additionally has an extension into the minor section to receive the outlet 30 of the container 29. The reservoir 22 provides guide slots for the insertion of the partition 28.

The major section of the pot over the cover 25 is in use filled with a plant nutrient medium, such as soil, moss, humus, or a mixture thereof for example, and one or more plants may be set to grow in the medium. The reservoir tray 22, cover 25, partition 28 and container 29 may be made from plastics materials by injection moulding, blow moulding or vacuum forming, as appropriate and most economical, as may the corresponding parts shown in Figs. 1 and 2.

The examples described, and the accompanying drawings are for illustrative purposes only, and are not definitive of the scope of the invention, for which reference should be made to the appended claims, which are not to be construed as restricted to the details of the embodiments described. In particular variations may be made to the shape and configuration of the components to suit pots of differing shapes and sizes. The self watering means may be sold together with or separately from the pot, which is of a standard kind.

In an alternative embodiment, not illustrated, a reservoir is provided externally of the pot. The reservoir may take the form of a dished container, and the base of the pot may be supported clear of the floor of the reservoir by steps formed at equilaterally spaced intervals about the reservoir, a wick ribbon is fed through two of the drainage apertures in the base of the pot so that each end of the wick ribbon dips into the reservoir below the pot. This reservoir may contain water up to a desired level, a maximum level being defined by a drainage hole in a raised boss. The reservoir may be associated with a feed container similar to those described provided externally of the pot. A series of steps, like a stair case, may be provided to accomodate the bases of pots of various diameters.

Claims

1.      Self watering means for a plant pot, comprising a reservoir for location in the base of a plant pot, a generally horizontally disposed member for supporting plant nutrient medium above the level of the reservoir, and a wick ribbon having at least one end in the reservoir and a substantial part of said ribbon disposed on said horizontally disposed member to transfer water to the plant nutrient medium by capilliary action in the wick ribbon, characterised in that an upstanding partition (8, 28) is provided in the pot (1, 21) to define a compartment, and a container (9, 29) for water is located in said compartment, with an outlet (10, 30) of the container being downwardly directed and defining the level of water in the reservoir whereby water is supplied from the container to the reservoir at the same rate as depletion of the reservoir is effected by transfer of water to the plant nutrient medium by the wick ribbon (6, 26).

2.      Means according to Claim 1 characterised in that said container has a valve (11, 31) which is spring loaded to be normally closed and acts to keep the container closed until it is in position, said valve being opened by a probe (11a) which is pushed inwardly into the outlet by pressing on the bottom of the reservoir when the container is put in place.

3.      Means according to Claim 1, characterised in that said partition is a cylindrical member (8) within which a bottle-shaped container (9) can be located.

4.      Means according to claim 1 characterised in that said partition is a straight wall (28) which separates a section of the pot to accommodate the container (29).

5. Means according to Claim 2 characterised in that said container has a sub-compartment (32) in communication with the main volume of the container close to the outlet thereof, so that water will only drain from the sub-compartment when the water in the container is almost exhausted.

6. Means according to claim 5 characterised in that a marker float (33) is located in said sub-compartment to float on the water therein, so that its disappearance signals that the container is ready to be removed and refilled.

7. Means according to claim 1, characterised in that said reservoir is provided externally of the pot, the pot standing on step means in the reservoir, and the container also being provided externally of the pot.

8. Self watering means for a plant pot characterised in that it is substantially as hereinbefore described with reference to and as illustrated in Figs. 1 and 2 of the accompanying drawings.

9. Self watering means for a plant pot characterised in that it is substantially as hereinbefore described with reference to and as illustrated in Fig. 3 of the accompanying drawings.

10. A plant pot characterised in that it is equiped with self watering means according to any one of the preceding claims.

0195542

*Fig. 1*

Fig. 2

Fig. 3

0195542

Application number

EP  86 30 1411

## EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-C- 837 332 (SEEGER)<br>* Page 2, lines 71-76; claim 1; figure 5 * | 1 | A 01 G 27/00 |
| X | FR-A-1 517 928 (AUFFRET)<br>* Page 1, left-hand column, paragraph 3 - right-hand column, paragraph 4; figures 1-9 * | 1 | |
| A | | 2 | |
| A | US-A-3 067 543 (BRACEY)<br>* Column 1, line 54 - column 3, line 18; figure 1 * | 2 | |
| A | CA-A-1 156 464 (ADLER)<br>* Page 7, paragraph 3; figure 7 * | 2 | TECHNICAL FIELDS SEARCHED (Int. Cl 4) |
| A | FR-A-2 322 533 (GROSFILLEX)<br>* Page 1, line 35 - page 3, line 18; figure 1 * | 1-3 | A 01 G |
| A | FR-A-2 181 549 (GAGNARD)<br>* Page 2, line 35 - page 4, line 21; figure 1 * | 1,4,6 | |
| A | US-A-3 193 970 (GREEN)<br>* Column 2, lines 18-49; figure 1 * | 7 | |

--- -/-

The present search report has been drawn up for all claims

| Place of search | Date of completion of the search | Examiner |
|---|---|---|
| THE HAGUE | 13-06-1986 | HERYGERS J.J. |

**0195542**

Application number

## EUROPEAN SEARCH REPORT

**European Patent Office**

EP   86 30 1411

Page   2

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| A | FR-A-2 088 860   (CALTAGIRONE)<br>*   Page 2, line 33 - page 3, line 13;   page 4, lines 12-25; figures 1,2,8 * | 1 | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 13-06-1986 | HERYGERS J.J. |